(19) Europäisches Patentamt
European Patent Office
Office européen des brevets

(11) **EP 1 582 005 B1**

(12) **EUROPEAN PATENT SPECIFICATION**

(45) Date of publication and mention
of the grant of the patent:
**03.11.2010 Bulletin 2010/44**

(21) Application number: **03778695.1**

(22) Date of filing: **29.12.2003**

(51) Int Cl.:
***H04B 1/707*** (2006.01)

(86) International application number:
**PCT/IB2003/006246**

(87) International publication number:
**WO 2004/059863 (15.07.2004 Gazette 2004/29)**

(54) **METHOD AND DEVICE FOR MULTI-USER DETECTION WITH SIMPLIFIED DE-CORRELATION IN A CDMA SYSTEM**

VERFAHREN UND VORRICHTUNG ZUR MEHRBENUTZERDETEKTION MIT VEREINFACHTER DEKORRELATION IN EINEM CDMA-SYSTEM

PROCEDE ET DISPOSITIF DE DETECTION MULTI-UTILISATEUR PAR DECORRELATION SIMPLIFIEE DANS UN SYSTEME AMRC

(84) Designated Contracting States:
**AT BE BG CH CY CZ DE DK EE ES FI FR GB GR HU IE IT LI LU MC NL PT RO SE SI SK TR**

(30) Priority: **30.12.2002 CN 02160465**

(43) Date of publication of application:
**05.10.2005 Bulletin 2005/40**

(73) Proprietor: **NXP B.V.**
**5656 AG Eindhoven (NL)**

(72) Inventors:
• **Liang, Jingxin,**
**Philips Electronics China**
**200070 Shanghai (CN)**
• **Yin, Xiaojun,**
**Philips Electronics China**
**200070 Shanghai (CN)**
• **Zhang, Zhiyu,**
**Philips Electronics China**
**200070 Shanghai (CN)**

(74) Representative: **Gray, Peter John Bracey et al**
**Thompson Gray LLP**
**Sussex Innovation Centre**
**Science Park Square**
**Falmer**
**Brighton BN1 9SB (GB)**

(56) References cited:
**EP-A- 0 971 485**

• **YIMIN ZHANG ET AL: "Transform domain array processing for CDMA systems" STATISTICAL SIGNAL AND ARRAY PROCESSING, 2000. PROCEEDINGS OF THE TENTH IEEE WORKSHOP ON, 14 - 16 August 2000, pages 23-27, XP010512115 Pocono Manor, PA USA**
• **MILLER S L ET AL: "MMSE DETECTION OF MULTI-CARRIER CDMA" MILCOM 1999. IEEE MILITARY COMMUNICATIONS CONFERENCE PROCEEDINGS. ATLANTIC CITY, NJ, OCT 31 - NOV. 3, 1999, IEEE MILITARY COMMUNICATIONS CONFERENCE, NEW YORK, NY: IEEE, US, vol. 2 OF 2 CONF. 18, 31 October 1999 (1999-10-31), pages 1085-1089, XP000922147 ISBN: 0-7803-5539-3**

**Description**

**FIELD OF THE INVENTION**

The invention relates to a de-correlation method and relative device in CDMA, especially relates to a simplified de-correlation method and relevant device in TD-SCDMA multi-user detection.

**BACKGROUND OF THE INVENTION**

Under the collective influence of channel multi-path dispersion, Inter-Symbol Interference and Multiple Access Interference, it becomes a key of that the multi-user detection is practical or not, that how to depress the complexity of the multi-user detection cancellation algorithm, namely the de-correlation method, to acceptable degree. A received symbol vector can be expressed as the sum of a noise vector and the product that a transmitted symbol vector D left multiply by a channel correlation matrix R. Among the algorithm of demodulating the received symbol vector and getting the estimation $\hat{D}$ of the transmitted symbol, the most complex step is getting the inverse matrix $R^{-1}$ of the channel correlation matrix R. For example, usually existing technology adopts the following method: in downlink spreading factor is SF=16. Assuming there are K users in one time slot and $1 \leq K \leq 16$, in each of the data part, there are K*N data symbols altogether, each user has N=22 data symbols. Let the $n^{th}$ transmitted data symbols of all the K users be

$$D^{(n)} = (d_1^{(n)}, d_2^{(n)}, d_3^{(n)}, \ldots d_k^{(n)}), \qquad n=1,\ldots,K \qquad (1)$$

The symbol sequence of each user consists of N elements with intervals Ts. The elements are taken from a complex alphabet (1,j,-1,j). Each data symbols of user K is multiplied by the user specific signature sequence. The specific signature sequence is expressed as:

$$C^{(k)} = (c_1^{(k)}, c_2^{(k)}, \ldots, c_Q^{(k)})^T, \qquad k=1,\ldots,K \qquad (2)$$

Here $[\cdot]^T$ means vector/matrix transposition. The user specific signature sequence consists of Q chips at chip interval T c that is equal to Ts/Q. Each of the K channels is characterized by its discrete impulse response. The discrete impulse response of the $k^{th}$ channel is expressed as:

$$H^{(k)} = (h_1^{(k)}, h_2^{(k)}, \ldots, h_W^{(k)})^T, \qquad k=1,\ldots,K \qquad (3)$$

The discrete impulse response consists of W samples at chip rate interval Tc. The channel impulse response is assumed to be unchanged during one time slot.

It is very obviously that ISI arises when W>1, at one time, MAI arises due to channel distortion and non-orthogonal symbol $C^{(k)}$. The combined channel impulse response is defined by the convolution:

$$B^{(k)} = (b_1^{(k)}, b_2^{(k)}, \ldots, b_{Q+W-1}^{(k)})^T = C^{(k)} * H^{(k)}, \qquad k=1,\ldots,K \qquad (4)$$

The received sequence e is obtained at the chip rate. It is a sum of K sequences, each of length (N · Q+W-1), that are assumed to be arrive synchronously, perturbed by an noise sequence with same length:

$$n = (n_1, n_2, \ldots, n_{N \cdot Q+W-1})^T \qquad (5)$$

The received sequence can be written as

$$e=(e_1, e_2, \ldots e_{N \cdot Q+W-1})^T = A \cdot D + n \qquad (6)$$

With transmitted data vector

$$D=(D^{(1)}, D^{(2)}, \ldots, D^{(N)})^T$$

$$= \{d_1^{(1)}, d_2^{(1)}, \ldots d_K^{(1)}, \ldots \ldots d_1^{(n)}, d_2^{(n)}, \ldots, d_K^{(n)}, \ldots \ldots d_1^{(N)}, d_2^{(N)}, \ldots, d_K^{(N)}\}^T$$

$$=(d_1, d_2, \ldots, d_{KN})^T \qquad (7)$$

Where $d_1^{(n)}, d_2^{(n)}, \ldots \ldots d_K^{(n)}$ is the $n^{th}$ symbol of all the K users, and

$$d_j \overset{def}{=} d_K^{(n)}; \, j = k + K \cdot (n-1), \, k=1, \ldots K, \, n=1 \ldots N \qquad (8)$$

With the matrix

$$A=(a_{ij}); \, i=1 \ldots (N \cdot Q+W-1), \, j=1 \ldots K \cdot N$$

$$a_{Q(n-1)+l, \, k+K(n-1)} = \begin{cases} B_l^{(k)}, & \text{when} \begin{cases} n=1 \ldots N, k=1 \ldots K \\ l=1 \ldots (Q+W-1) \end{cases} \\ 0, & \text{other} \end{cases} \qquad (9)$$

The received sequence e has to be processed to obtain a decision on the transmitted data symbol D under the assumption that the user-specific signature sequences $C^{(k)}$ and the channel cross-correlation H $^{(k)}$, k=1...K are known at receivers.

At the same time zero-forcing method is used to eliminate MAI and ISI. It is based on minimizing

$$\| A\hat{D} - e \|^2 \qquad (10)$$

Here $\hat{D}$ is the estimation of transmitted symbols of all the K users. So

$$\hat{D} = (A^H A)^{-1} A^H e = D + (A^H A)^{-1} A^H n \qquad (11)$$

Here $[\cdot]^H$ means Hermit transposition and $A^H e$ is the output of match filter, $(A^H A)^{-1} A^H n$ is noise term. Above

$\hat{D}$ contains desired output D and noise, without MAT and ISI. Its covariance matrix $\delta^2(A^H A)^{-1}$ gives the correlation of the noise term. Generally, the variance of the noise term is more than the noise term which is obtained because of using match filter method. The SNR per symbol at the output of the de-correlation is equal to

$$\gamma(k, n) = 1/\delta^2[(A^H A)^{-1}]_{i,j} \; ; j = n + N \cdot (k-1), k=1...K, n=1...N \qquad (12)$$

Let

$$R = A^H A \qquad (13)$$

Then (Eq.11) becomes

$$\hat{D} = (R)^{-1}(R D + A^H n) = D + (R)^{-1} A^H n \qquad (14)$$

Because the difficulty exists in the matrix inversion operation of R, the calculation burden in TD-SCDMA system is bigger.

EP 0971485 A1 discloses a multi-user detection scheme for CDMA in which a correlation matrix is generated from received signals, and a factor of the correlation matrix is generated by using a factorisation algorithm to generate first elements of the factor and generating second elements of the factor by selectively copying the first elements.

In "Transform Domain Array Processing for CDMA Systems", Yimin Zhang et al, Proceedings of the Tenth IEEE Workshop on Statistical Signal and Array Processing, 14-16 August 2000, pp 23-27, a scheme is disclosed in which a received signal is transformed into signal vectors in M orthogonal transform domain bins. A correlation matrix is determined and then approximated by ignoring off-block diagonal elements, resulting diagonal matrix being relatively simple to invert.

**SUMMARY OF THE INVENTION**

The invention wants to resolve the technical problem that provides a simplified de-correlation method to greatly reduce the complexity degree in multi-user detection calculation.

According to a first aspect of the invention there is provided a de-correlation method for TD-SCDMA multi-user detection, comprising:

a. Receiving wireless symbols S;
b. Generating a channel correlation matrix R={$r_{ij}$};
c. Generating a partial correlation matrix $R_P$ = {$r_{i,j}$}, i, j =1...(2P + 1)K, $R_P$ being a diagonal submatrix of R, where K is the number of user signals in one time slot, where P is the number of symbols earlier than or later than the current symbols that cause interference to the current symbols;
d. Inverting the partial correlation matrix $R_P$;
characterised by:

e. Generating matrix $\mathbf{V}^{(m)} = \left\{ v_{i,j}^{(m)} \right\}$, wherein

$$v_{i,j}^{(m)} = \left( \mathbf{R}_P^{-1} \right)_{i+(m-1)K, j}, \quad i = 1...K, j = 1...(2P+1)K, m = 1...2P+1;$$

d. Recovering original data symbols D from received symbols S and $\mathbf{V}^{(m)}$ dependent on the location of the data symbols D according to:

when $1 \leq n \leq P$, $\mathbf{V}^{(m)} = \mathbf{V}^{(n)}$, $\mathbf{D}^{(n)}$ is recovered as $\hat{\mathbf{D}}^{(n)} = \mathbf{V}^{(n)} \dot{\mathbf{S}}_P^{(n)}$,

when $P+1 \leq n \leq N-P$, $\mathbf{V}^{(m)} = \mathbf{V}^{(P+1)}$, $\mathbf{D}^{(n)}$ is recovered as $\hat{\mathbf{D}}^{(n)} = \mathbf{V}^{(P+1)}\mathbf{S}_P^{(n)}$,

when $N+1-P \leq n \leq N$, $\mathbf{V}^{(m)} = \mathbf{V}^{(2P+1+n-N)}$, $\mathbf{D}^{(n)}$ is recovered as $\hat{\mathbf{D}}^{(n)} = \mathbf{V}^{(2P+1+n-N)}\mathbf{S}_P^{(n)}$,

where $\hat{\mathbf{D}}^{(n)}$ is an estimation of original symbol, n is the location of the symbol, and N is the number of symbols per user.

The invention also provides apparatus for performing the method according to the first aspect of the invention.

Based on the character of channel correlation matrix, the invention has de-modulated only according to the inverse matrix of the diagonal partial matrix $R_p$ of the correlation matrix R so as to reduce greatly the calculation in obtaining inverse matrix and reduce the loss of de-modulate performance. Assuming p=2, the most delay-time is 4 chips, multi-path is 4, when total users are 12, the performance is same as the un-simplified. Because the calculation complexity of the matrix with size M*M is directly proportional to the $M^3$, so when P=22, N=22, the simplified inversion has only $(5/22)^3$ times calculation complexity of the original un-simplified matrix inversion. This is quite a great reduction. Equally, in the symbol recover calculation, the complexity is also reduced to (5/22) of the original operation. operation.

## BRIEF DESCRIPTION OF THE DRAWING FIGURES

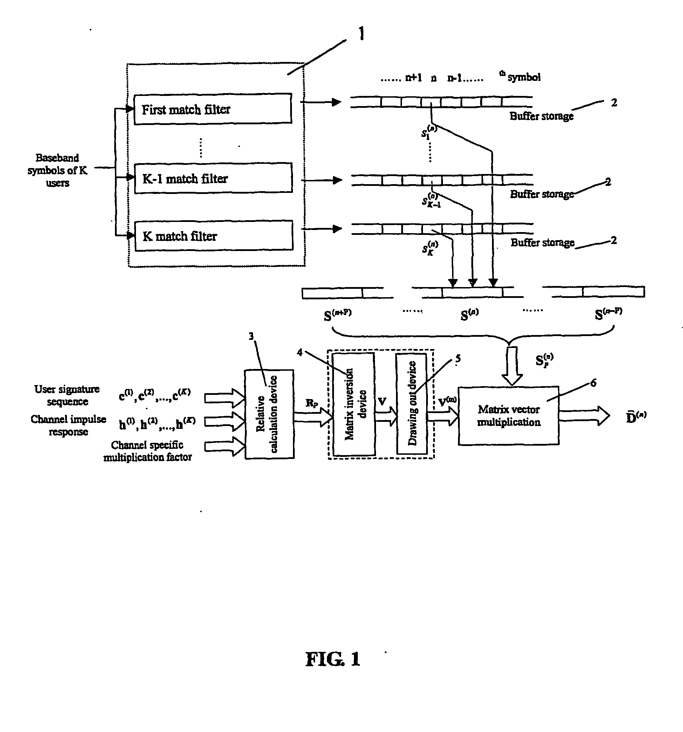

Figure 1. is a device adapted to perform the de-correlation method of the invention.

## DETAILED DESCRIPTION OF THE INVENTION

Original transmitted data symbol can be expressed as

$$D = [ \ldots\ldots \quad d_1^{(n-p)}, \quad d_2^{(n-p)}, \quad \ldots, \quad d_k^{(n-p)}, \quad \ldots\ldots, \quad d_1^{(n)}, \quad d_2^{(n)} \ldots, \quad d_k^{(n)} \ldots\ldots \quad , \quad d_1^{(n+p)} \quad ,$$

$$d_2^{(n+p)}, \ldots, d_k(n+p) \ldots\ldots]$$

Above $d_1^{(n-p)}, d_2^{(n-p)}, \ldots, d_k^{(n-p)}$ means $(n-p)^{th}$ symbol of all K users. Above $d_1^{(n)}, d_2^{(n)} \ldots, d_k^{(n)}$ means $n^{th}$ symbol of all K users. Above $d_1^{(n+p)}, d_2^{(n+p)}, \ldots, d_k^{(n+p)}$ means $(n+p)^{th}$ symbol of all K users.

Received symbol S can be expressed as
$S = [ \ldots \hat{s}_1^{(n-p)}, \hat{s}_2^{(n-p)}, \ldots, \hat{s}_k^{(n-p)}, \ldots, \hat{s}_1^{(n-p)}, \hat{s}_2^{(n)} \ldots, \hat{s}_k^{(n)} \ldots, \hat{s}_1^{(n+p)}, \hat{s}_2^{(n+p)}, \ldots, \hat{s} k^{(n+p)} \ldots]$. Above $\hat{s}_1^{(n-p)}, \hat{s}_2^{(n-p)}, \ldots, \hat{s}_k^{(n-p)}$ means $(n-p)^{th}$ symbol of all K users. Above $\hat{s}_1^{(n)}, \hat{s}_2^{(n)} \ldots, \hat{s}_k^{(n)}$ means $n^{th}$ symbol of all K users. Above $\hat{s}_1^{(n+p)}, \hat{s}_2^{(n+p)}, \ldots, \hat{s}_k^{(n+p)}$ means $(n+P)^{th}$ symbol of all K users. Let us define $\hat{s}_1^{(n)}, \hat{s}_2^{(n)} \ldots, \hat{s}_k^{(n)}$ as $S^{(n)}$. Since the multi-path spread in TD-SCDMA is assumed to be less than 12 chips, and the spreading factor for downlink is 16, so there are no ISI from symbols more than 2 symbols away. Also the MAI and ISI part from any particular other user symbol is always much less than desired user symbol amplitude. To recover $D^{(n)} = d_1^{(n)}, d_2^{(n)} \ldots, d_k^{(n)}$, influence from symbols in $S^{(t)}$ (t<n-p, or t>n+p) can be neglected. It means $D^{(n)}$ can be recovered from received symbols
$S_p^{(n)} = [\hat{s}_1^{(n-p)}, \hat{s}_2^{(n-p)}, \ldots, \hat{s}_k^{(n-p)}, \ldots, \hat{s}_1^{(n)}, \hat{s}_2^{(n)} \ldots, \hat{s}_k^{(n)} \ldots, \hat{s}_1^{(n+p)}, \hat{s}_2^{(n+p)}, \ldots, \hat{s}_k^{(n+p)}]$. Above $\hat{s}_1^{(n-p)}, \hat{s}_2^{(n-p)}, \ldots, \hat{s}_k^{(n-p)}$ means $(n-p)^{th}$ symbol of all K users. Above $\hat{s}_1^{(n)}, \hat{s}_2^{(n)} \ldots, \hat{s}_k^{(n)}$ means $n^{th}$ symbol of all K users. Above $\hat{s}_1^{(n+p)}, \hat{s}_2^{(n+p)}, \ldots, \hat{s}_k^{(n+p)}$ means $(n+p)^{th}$ symbol of all K users. Assume P is large enough.

We here define a partial correlation matrix

$$R_p = \{r_{i,j}\}, \ i,j = 1 \ldots (2P+1)K$$

Here $r_{i,j}$ is the element of R in the $i^{th}$ row and $j^{th}$ column.

Define a new matrix $V^{(m)} = \{v_{i,j}^{(m)}\}$

$$V_{i,j}{}^{(m)} = (R^{-1}{}_p)_{i+(m-1)K,j} \, , \, i=1 \ldots K, \, j=1 \ldots (2P+1)K, \, m=1 \ldots 2P+1$$

Here $R^{-1}{}_p$ means matrix inversion. When $P+1 \leq n \leq N-P$, $D^{(n)}$ can be recovered as $\hat{D}^{(n)} = V^{(P+1)}S_p{}^{(n)}$.

$\hat{D}^{(n)}$ is the estimation of transmitted symbol. When $n \leq P$, i.e. the interference symbol before $D^{(n)}$ is less than P, $D^{(n)}$ can be recovered as

$$\hat{D}^{(n)} = V^{(n)}S_p{}^{(n)}.$$

Here $S_p{}^{(n)}$ is defined as

$$S_p{}^{(n)} = [ \hat{s}_1{}^{(1)}, \hat{s}_2{}^{(1)}, \ldots, \hat{s}_K{}^{(1)}, \ldots, \hat{s}_1{}^{(n)}, \hat{s}_2{}^{(n)} \ldots, \hat{s}_K{}^{(n)} \ldots, \hat{s}_1{}^{(2P+1)}, \hat{s}_2{}^{(2P+1)}, \ldots, \hat{s}_K{}^{(2P+1)}].$$

Above $\hat{s}_1{}^{(1)}, \hat{s}_2{}^{(1)}, \ldots, \hat{s}_k{}^{(1)}$ is first symbol of all K users. Above $\hat{s}_1{}^{(n)}, \hat{s}_2{}^{(n)} \ldots, \hat{s}_k{}^{(n)}$ is $n^{th}$ symbol of all K users. Above $\hat{s}_1{}^{(2P+1)}, \hat{s}_2{}^{(2P+1)}, \ldots, \hat{s}_k{}^{(2P+1)}$ is $2P+1^{th}$ symbol of all K users.

When $n \geq N+1-P$, and the interference symbols after $D^{(n)}$ is less P, $D^{(n)}$ can be recovered as

$$\hat{D}^{(n)} = V^{(2P+1+n-N)}S_p{}^{(n)}.$$

Here $S_p{}^{(n)}$ is defined as

$$S_p{}^{(n)} = [ \hat{s}_1{}^{(N-2P)}, \hat{s}_2{}^{(N-2P)}, \ldots, \hat{s}_k{}^{(N-2P)}, \ldots, \hat{s}_1{}^{(n)}, \hat{s}_2{}^{(n)} \ldots, \hat{s}_k{}^{(n)} \ldots, \hat{s}_1{}^{(N)}, \hat{s}_2{}^{(N)}, \ldots, \hat{s}_k{}^{(N)}].$$

Above $\hat{s}_1{}^{(N-2P)}, \hat{s}_2{}^{(N-2P)}, \ldots, \hat{s}_K{}^{(N-2P)}$ is $N-2P^{th}$ symbol of all K users. Above $\hat{s}_1{}^{(n)}, \hat{s}_2{}^{(n)} \ldots, \hat{s}_K{}^{(n)}$ is $n^{th}$ symbol of all K users. Above $\hat{s}_1{}^{(N)}, \hat{s}_2{}^{(N)}, \ldots, \hat{s}_K{}^{(N)}]$, is $N^{th}$ symbol of all K users.

In addition, the simplified de-correlation method can be named as partial de-correlation whose meaning is that use de-correlation method to eliminate the influence of the symbols which are earlier or later than the current on current symbols only according to P group of symbols which are earlier or later than current symbols.

The device illustrated in Figure 1 includes K match filters 1, K buffer storage 2 which are correspondingly connected with K match filters, relative calculation device 3 to define partial correlation matrix $R_p$, matrix inversion device 4 and drawing out device 5 coupled to the relative calculation device 3 to define new matrix $V^{(m)}$. The output of the mentioned buffer storage 2 and the output of the relative calculation device 3 are connected with the input of the matrix-vector multiplication 6.

The mentioned baseband symbols of K users respectively are inputted to K match filters 1 and K buffer storage 2 to get received symbol $S_p{}^n$. 1 and 2 are connected with each other correspondingly The mentioned user signature sequence $C^{(k)} = (c_1{}^{(k)}, c_2{}^{(k)}, \ldots C_Q{}^{(k)})^T$, channel impulse response $H^{(1)}, H^{(2)}, \ldots, H^{(k)}$, channel specific multiplication factor is respectively inputted to the relative calculation device 3 to obtain partial correlation matrix, then obtain the inverse matrix V of matrix $R_p$ through matrix inversion device 4 and drawing out device 5, and draw out the partial matrix $V^{(m)}$ from it. Through matrix vector multiplication 6 symbol estimation value $\hat{D}^{(n)}$ can be obtained from mentioned received symbol $S_p{}^{(n)}$ and $V^{(m)}$.

# EP 1 582 005 B1

**Claims**

1.  A de-correlation method for CDMA multi-user detection, comprising:

    a. Receiving wireless symbols S;
    b. Generating a channel correlation matrix R={$r_{i,j}$};
    c. Generating a partial correlation matrix $R_P$ = {$r_{i,j}$} i,j =1...(2P+1)K, $\mathbf{R}_P$ being a diagonal submatrix R, where K is the number of user signals in one time slot, where P is the number of symbols earlier than or later than the current symbols that cause interference to the current symbols;
    d. Inverting the partial correlation matrix $\mathbf{R}_P$;
    **characterised by**:

    e. Generating matrix $\mathbf{V}^{(m)} = \left\{ v_{i,j}^{(m)} \right\}$, wherein

    $$v_{i,j}^{(m)} = \left( \mathbf{R}_P^{-1} \right)_{i+(m-1)K,j}, \quad i = 1...K, j = 1...(2P+1)K, m = 1...2P+1;$$

    d. Recovering original data symbols D from received symbols S and $\mathbf{V}^{(m)}$ dependent on the location of the data symbols D according to:

    when $1 \le n \le P$, $\mathbf{V}^{(m)} = \mathbf{V}^{(n)}$, $\mathbf{D}^{(n)}$ is recovered as $\hat{\mathbf{D}}^{(n)} = \mathbf{V}^{(n)} \mathbf{S}_P^{(n)}$,

    when $P+1 \le n \le N-P$, $\mathbf{V}^{(m)} = \mathbf{V}^{(P+1)}$, $\mathbf{D}^{(n)}$ is recovered as $\hat{\mathbf{D}}^{(n)} = \mathbf{V}^{(P+1)} \mathbf{S}_P^{(n)}$,

    when $N+1-P \le n \le N$, $\mathbf{V}^{(m)} = \mathbf{V}^{(2P+1+n-N)}$, $\mathbf{D}^{(n)}$ is recovered as $\hat{\mathbf{D}}^{(n)} = \mathbf{V}^{(2P+1+n-N)} \mathbf{S}_P^{(n)}$,

    where $\hat{\mathbf{D}}^{(n)}$ is an estimation of original symbol, n is the location of the symbol, and N is the number of symbols per user.

2.  A de-correlation method as claimed in claim 1, wherein:

    for $P+1 \le n \le N-P$, the received wireless symbols S are defined as

    $$\mathbf{S}_P^{(n)} = \left( \underbrace{\hat{S}_1^{(n-P)}, \hat{S}_2^{(n-P)}, ..., \hat{S}_K^{(n-P)}}_{n-P^{th} \text{ symbols of all K users}}, ......, \underbrace{\hat{S}_1^{(n)}, \hat{S}_2^{(n)}, ..., \hat{S}_K^{(n)}}_{n^{th} \text{ symbols of all K users}}, ......, \underbrace{\hat{S}_1^{(n+P)}, \hat{S}_2^{(n+P)}, ..., \hat{S}_K^{(n+P)}}_{n+P^{th} \text{ symbols of all K users}} \right)$$

    where $\hat{S}_1^{(n-P)}, \hat{S}_2^{(n-P)}, ..., \hat{S}_k^{(n-P)}$ are the $(n-P)^{th}$ symbols of all K users,

    $\hat{S}_1^{(n)}, \hat{S}_2^{(n)}, ..., \hat{S}_k^{(n)}$ are the $n^{th}$ symbols of all K users, and

    $\hat{S}_1^{(n+p)}, \hat{S}_2^{(n+p)}, ..., \hat{S}_k^{(n+p)}$ are the $(n+P)^{th}$ symbols of all K users;

    for $1 \le n \le P$, the received wireless symbols S are defined as

    $$\mathbf{S}_P^{(n)} = \left( \underbrace{\hat{S}_1^{(1)}, \hat{S}_2^{(1)}, ..., \hat{S}_K^{(1)}}_{1^{th} \text{ symbols of all K users}}, ......, \underbrace{\hat{S}_1^{(n)}, \hat{S}_2^{(n)}, ..., \hat{S}_K^{(n)}}_{n^{th} \text{ symbols of all K users}}, ......, \underbrace{\hat{S}_1^{(2P+1)}, \hat{S}_2^{(2P+1)}, ..., \hat{S}_K^{(2P+1)}}_{2P+1^{th} \text{ symbols of all K users}} \right)$$

7

where

$\widehat{S}_1^{(1)}, \widehat{S}_2^{(1)}, \cdots, \widehat{S}_k^{(1)}$ are the 1st symbols of all K users,

$\widehat{S}_1^{(n)}, \widehat{S}_2^{(n)}, \cdots, \widehat{S}_k^{(n)}$ are the (n)th symbols of all K users, and

$\widehat{S}_1^{(2P+1)}, \widehat{S}_2^{(2P+1)}, \cdots, \widehat{S}_k^{(2P+1)}$ are the (2P+1)th symbols of all K users; and

for $N+1-P \leq n \leq N$, the received wireless symbols S are defined as

$$\mathbf{S}_P^{(n)} = \left\{ \underbrace{\widehat{S}_1^{(N-2P)}, \widehat{S}_2^{(N-2P)}, \ldots, \widehat{S}_K^{(N-2P)}}_{\text{N-2P}^{th} \text{ symbols of all K users}}, \ldots\ldots, \underbrace{\widehat{S}_1^{(n)}, \widehat{S}_2^{(n)}, \ldots, \widehat{S}_K^{(n)}}_{n^{th} \text{ symbols of all K users}}, \ldots\ldots, \underbrace{\widehat{S}_1^{(N)}, \widehat{S}_2^{(N)}, \ldots, \widehat{S}_K^{(N)}}_{N^{th} \text{ symbols of all K users}} \right\}$$

where

$\widehat{S}_1^{(N-2P)}, \widehat{S}_2^{(N-2P)}, \cdots, \widehat{S}_k^{(N-2P)}$ are the (N-2P)th symbols of all K users,

$\widehat{S}_1^{(n)}, \widehat{S}_2^{(n)}, \cdots, \widehat{S}_k^{(n)}$ are the nth symbols of all K users, and

$\widehat{S}_1^{(N)}, \widehat{S}_2^{(N)}, \cdots, \widehat{S}_k^{(N)}$ are the N th symbols of all K users.

3. A de-correlation method as claimed in claim 1 or 2, wherein $1 \leq K \leq 16$.

4. A de-correlation method as claimed in claim 1 or 2, wherein P is an integer and N is 22.

5. A de-correlation method as claimed in claim 4, wherein P is 2.

6. Apparatus adapted to perform the method of any one of claims 1 to 5 in a CDMA system.

**Patentansprüche**

1. Dekorrelationsverfahren für die CDMA-Mehrbenutzerdetektion, das Folgendes umfasst:

   a. Empfangen von drahtlosen Symbolen S;
   b. Erzeugen einer Kanalkorrelationsmatrix R={$r_{i,j}$};
   c. Erzeugen einer Korrelations-Teilmatrix $\mathbf{R}_P$ = {$r_{i,j}$}, i, j = 1...(2P+1)K, wobei $\mathbf{R}_P$ eine Diagonal-Teilmatrix R ist, wobei K die Zahl von Benutzersignalen in einem Zeitschlitz ist, wobei P die Zahl von Symbolen ist, die früher oder später als die aktuellen Symbole sind, die Störungen der aktuellen Symbole bewirken;
   d. Umkehren der Korrelations-Teilmatrix $\mathbf{R}_P$;
   **gekennzeichnet durch**:

   e. Erzeugen der Matrix $\mathbf{V}^{(m)} = \left\{ v_{i,j}^{(m)} \right\}$, wobei

   $$v_{i,j}^{(m)} = \left( \mathbf{R}_P^{-1} \right)_{i+(m-1)K,\,j}, \qquad i = 1...K, j = 1...(2P+1)K, m = 1...2P+1\,;$$

   d. Zurückgewinnen ursprünglicher Datensymbole D aus empfangenen Symbolen S und $\mathbf{V}^{(m)}$ abhängig vom Ort der Datensymbole D gemäß:

   wenn $1 \leq n \leq P$, $\mathbf{V}^{(m)} = \mathbf{V}^{(n)}$, wird $\mathbf{D}^{(n)}$ zurückgewonnen als $\hat{\mathbf{D}}^{(n)} = \mathbf{V}^{(n)} \mathbf{S}_P^{(n)}$,

wenn $P+1 \leq n \leq N-P$, $\mathbf{V}^{(m)} = \mathbf{V}^{(P+1)}$, wird $\mathbf{D}^{(n)}$ zurückgewonnen als $\hat{\mathbf{D}}^{(n)} = \mathbf{V}^{(P+1)}\mathbf{S}_P^{(n)}$,

wenn $N+1-P \leq n \leq N$, $\mathbf{V}^{(m)} = \mathbf{V}^{(2P+1+n-N)}$, wird $\mathbf{D}^{(n)}$ zurückgewonnen als $\hat{\mathbf{D}}^{(n)} = \mathbf{V}^{(2P+1+n-N)}\mathbf{S}_P^{(n)}$, wobei $\hat{\mathbf{D}}^{(n)}$ eine Abschätzung des ursprünglichen Symbols ist, n der Ort des Symbols ist und $N$ die Zahl von Symbolen pro Benutzer ist.

2.  Dekorrelationsverfahren nach Anspruch 1, wobei:

für $P + 1 \leq n \leq N - P$, die empfangenen drahtlosen Symbole S definiert sind als

$$\mathbf{S}_P^{(n)} = \left( \underbrace{\widehat{s}_1^{(n-P)}, \widehat{s}_2^{(n-P)}, \ldots, \widehat{s}_K^{(n-P)}}_{n-P\text{-te Symbole aller K Benutzer}}, \ldots\ldots, \underbrace{\widehat{s}_1^{(n)}, \widehat{s}_2^{(n)}, \ldots, \widehat{s}_K^{(n)}}_{n\text{-te Symbole aller K Benutzer}}, \ldots\ldots, \underbrace{\widehat{s}_1^{(n+P)}, \widehat{s}_2^{(n+P)}, \ldots, \widehat{s}_K^{(n+P)}}_{n+P-te\text{ Symbole aller K Benutzer}} \right)$$

wobei

$\widehat{s}_1^{(n-P)}, \widehat{s}_2^{(n-P)}, \cdots, \widehat{s}_k^{(n-P)}$ die (n-P)-ten Symbole aller K Benutzer sind,

$\widehat{s}_1^{(n)}, \widehat{s}_2^{(n)}, \cdots, \widehat{s}_k^{(n)}$ die n-ten Symbole aller K Benutzer sind, und

$\widehat{s}_1^{(n+p)}, \widehat{s}_2^{(n+p)}, \cdots, \widehat{s}_k^{(n+p)}$ die (n+P)-ten Symbole aller K Benutzer sind;

für $1 \leq n \leq P$, die empfangenen drahtlosen Symbole S definiert sind als

$$\mathbf{S}_P^{(n)} = \left( \underbrace{\widehat{s}_1^{(1)}, \widehat{s}_2^{(1)}, \ldots, \widehat{s}_K^{(1)}}_{1\text{-te Symbole aller K Benutzer}}, \ldots\ldots, \underbrace{\widehat{s}_1^{(n)}, \widehat{s}_2^{(n)}, \ldots, \widehat{s}_K^{(n)}}_{n\text{-te Symbole aller K Benutzer}}, \ldots\ldots, \underbrace{\widehat{s}_1^{(2P+1)}, \widehat{s}_2^{(2P+1)}, \ldots, \widehat{s}_K^{(2P+1)}}_{2P+1-te\text{ Symbole aller K Benutzer}} \right)$$

wobei

$\widehat{s}_1^{(1)}, \widehat{s}_2^{(1)}, \cdots, \widehat{s}_k^{(1)}$ die 1. Symbole aller K Benutzer sind,

$\widehat{s}_1^{(n)}, \widehat{s}_2^{(n)}, \cdots, \widehat{s}_k^{(n)}$ die (n)-ten Symbole aller K Benutzer sind, und

$\widehat{s}_1^{(2P+1)}, \widehat{s}_2^{(2P+1)}, \cdots, \widehat{s}_k^{(2P+1)}$ die (2P+1)-ten Symbole aller K Benutzer sind; und für $N+1-P \leq n \leq N$, die empfangenen drahtlosen Symbole S definiert sind als

$$\mathbf{S}_P^{(n)} = \left( \underbrace{\widehat{s}_1^{(N-2P)}, \widehat{s}_2^{(N-2P)}, \ldots, \widehat{s}_K^{(N-2P)}}_{N-2P\text{-te Symbole aller K Benutzer}}, \ldots\ldots, \underbrace{\widehat{s}_1^{(n)}, \widehat{s}_2^{(n)}, \ldots, \widehat{s}_K^{(n)}}_{n\text{-te Symbole aller K Benutzer}}, \ldots\ldots, \underbrace{\widehat{s}_1^{(N)}, \widehat{s}_2^{(N)}, \ldots, \widehat{s}_K^{(N)}}_{N\text{-te Symbole aller K Benutzer}} \right)$$

wobei

$\widehat{s}_1^{(N-2P)}, \widehat{s}_2^{(N-2P)}, \cdots, \widehat{s}_k^{(N-2P)}$ die (N-2P)-ten Symbole aller K Benutzer sind,

$\widehat{s}_1^{(n)}, \widehat{s}_2^{(n)}, \cdots, \widehat{s}_k^{(n)}$ die n-ten Symbole aller K Benutzer sind, und

$\widehat{s}_1^{(N)}, \widehat{s}_2^{(N)}, \cdots, \widehat{s}_k^{(N)}$ die N-ten Symbole aller K Benutzer sind.

**3.** Dekorrelationsverfahren nach Anspruch 1 oder 2, wobei 1≤*K*≤16.

**4.** Dekorrelationsverfahren nach Anspruch 1 oder 2, wobei P eine ganze Zahl ist und N gleich 22 ist.

**5.** Dekorrelationsverfahren nach Anspruch 4, wobei P gleich 2 ist.

**6.** Vorrichtung zur Verwendung in einem CDMA-System zum Ausführen des Verfahrens nach einem der Ansprüche 1 bis 5.

**Revendications**

**1.** Procédé de décorrélation pour détection multi-utilisateur AMRC, comprenant :

a. la réception de symboles sans fil S ;
b. la génération d'une matrice de corrélation de canal R={$r_{i,j}$};
c. la génération d'une matrice de corrélation partielle $\mathbf{R}_P$ = {$r_{i,j}$}, i, j = 1...(2P + 1)K, $\mathbf{R}_P$ étant une sous-matrice diagonale R, où K est le nombre de signaux d'utilisateurs dans un créneau temporel, où P est le nombre de symboles antérieurs ou postérieurs aux symboles actuels qui produisent l'interférence avec les symboles actuels ;
d. l'inversion de la matrice de corrélation partielle $\mathbf{R}_P$;
**se caractérisant par** :

e. la génération de la matrice $\mathbf{V}^{(m)} = \left\{ v_{i,j}^{(m)} \right\}$, dans laquelle

$$v_{i,j}^{(m)} = \left( \mathbf{R}_P^{-1} \right)_{i+(m-1)K,j}, \qquad i = 1...K, j = 1...(2P+1)K, m = 1...2P+1 ;$$

d. la récupération des symboles D de données d'origine des symboles reçus S et $\mathbf{V}^{(m)}$ en fonction de l'emplacement des symboles de données D suivant :

quand 1≤*n*≤P, $\mathbf{V}^{(m)}$ = $\mathbf{V}^{(n)}$, $\mathbf{D}^{(n)}$ est récupéré comme $\hat{\mathbf{D}}^{(n)} = \mathbf{V}^{(n)} \mathbf{S}_P^{(n)}$ ,

quand *P*+1≤*n*≤N-P, $\mathbf{V}^{(m)}$ = $\mathbf{V}^{(P+1)}$, $\mathbf{D}^{(n)}$ est récupéré comme $\hat{\mathbf{D}}^{(n)} = \mathbf{V}^{(P+1)} \mathbf{S}_P^{(n)}$ ,

quand *N*+1-P≤*n*≤N, $\mathbf{V}^{(m)}$ = $\mathbf{V}^{(2P+1+n-N)}$, $\mathbf{D}^{(n)}$ est récupéré comme $\hat{\mathbf{D}}^{(n)} = \mathbf{V}^{(2P+1+n-N)} \mathbf{S}_P^{(n)}$ , où $\hat{\mathbf{D}}^{(n)}$ est une estimation de symbole d'origine, n est l'emplacement du symbole, et N est le nombre de symboles par utilisateur.

**2.** Procédé de décorrélation selon la revendication 1, dans lequel :

pour *P*+1≤*n*≤N-P, les symboles sans fils S reçus sont définis comme

$$\mathbf{S}_P^{(n)} = \left( \underbrace{\widehat{s}_1^{(n-P)}, \widehat{s}_2^{(n-P)},...,\widehat{s}_K^{(n-P)}}_{\text{n-P}^{\text{èmes}} \text{ symboles de tous les K utilisateurs}} ,......, \underbrace{\widehat{s}_1^{(n)}, \widehat{s}_2^{(n)},...,\widehat{s}_K^{(n)}}_{\text{n}^{\text{èmes}} \text{ symboles de tous les K utilisateurs}} ,......, \underbrace{\widehat{s}_1^{(n+P)}, \widehat{s}_2^{(n+P)},...,\widehat{s}_K^{(n+P)}}_{\text{n+P}^{\text{èmes}} \text{ symboles de tous les K utilisateurs}} \right)$$

où

$\widehat{s}_1^{(n-P)}, \widehat{s}_2^{(n-P)}, \cdots, \widehat{s}_k^{(n-P)}$ sont les (n-P)èmes Symboles de tous les K utilisateurs,

$\widehat{s}_1^{(n)}, \widehat{s}_2^{(n)}, \cdots, \widehat{s}_k^{(n)}$ sont les nèmes symboles de tous les K utilisateurs, et

$\widehat{s}_1^{(n+p)}, \widehat{s}_2^{(n+p)}, \cdots, \widehat{s}_k^{(n+p)}$ sont les (n+p)$^{èmes}$ symboles de tous les K utilisateurs ;

pour $1 \leq n \leq P$, les symboles sans fils S reçus sont définis comme

$$\mathbf{S}_P^{(n)} = \left( \underbrace{\widehat{s}_1^{(1)}, \widehat{s}_2^{(1)}, ..., \widehat{s}_K^{(1)}}_{1^{ers}\ symboles\ de\ tous\ les\ K\ utilisateurs}, ......, \underbrace{\widehat{s}_1^{(n)}, \widehat{s}_2^{(n)}, ..., \widehat{s}_K^{(n)}}_{n^{èmes}\ symboles\ de\ tous\ les\ K\ utilisateurs}, ......, \underbrace{\widehat{s}_1^{(2P+1)}, \widehat{s}_2^{(2P+1)}, ..., \widehat{s}_K^{(2P+1)}}_{2P+1^{èmes}\ symboles\ de\ tous\ les\ K\ utilisateurs} \right)$$

où

$\widehat{s}_1^{(1)}, \widehat{s}_2^{(1)}, \cdots, \widehat{s}_k^{(1)}$ sont les 1$^{ers}$ symboles de tous les K utilisateurs,

$\widehat{s}_1^{(n)}, \widehat{s}_2^{(n)}, \cdots, \widehat{s}_k^{(n)}$ sont les (n)$^{èmes}$ symboles de tous les K utilisateurs, et

$\widehat{s}_1^{(2P+1)}, \widehat{s}_2^{(2P+1)}, \cdots, \widehat{s}_k^{(2P+1)}$ sont les (2P+1)$^{èmes}$ symboles de tous les K utilisateurs ; et

pour $N+1-P \leq n \leq N$, les symboles sans fils S reçus sont définis comme

$$\mathbf{S}_P^{(n)} = \left( \underbrace{\widehat{s}_1^{(N-2P)}, \widehat{s}_2^{(N-2P)}, ..., \widehat{s}_K^{(N-2P)}}_{N-2P^{èmes}\ symboles\ de\ tous\ les\ K\ utilisateurs}, ......, \underbrace{\widehat{s}_1^{(n)}, \widehat{s}_2^{(n)}, ..., \widehat{s}_K^{(n)}}_{n^{èmes}\ symboles\ de\ tous\ les\ K\ utilisateurs}, ......, \underbrace{\widehat{s}_1^{(N)}, \widehat{s}_2^{(N)}, ..., \widehat{s}_K^{(N)}}_{N^{èmes}\ symboles\ de\ tous\ les\ K\ utilisateurs} \right)$$

où

$\widehat{s}_1^{(N-2P)}, \widehat{s}_2^{(N-2P)}, \cdots, \widehat{s}_k^{(N-2P)}$ sont les (N-2P)$^{èmes}$ symboles de tous les K utilisateurs,

$\widehat{s}_1^{(n)}, \widehat{s}_2^{(n)}, \cdots, \widehat{s}_k^{(n)}$ sont les n$^{èmes}$ symboles de tous les K utilisateurs, et

$\widehat{s}_1^{(N)}, \widehat{s}_2^{(N)}, \cdots, \widehat{s}_k^{(N)}$ sont les N$^{èmes}$ symboles de tous les K utilisateurs.

3. Procédé de décorrélation selon la revendication 1 ou 2, dans lequel $1 \leq K \leq 16$.

4. Procédé de décorrélation selon la revendication 1 ou 2, dans lequel P est un nombre entier et N est 22.

5. Procédé de décorrélation selon la revendication 4, dans lequel P est 2.

6. Appareil à utiliser dans un système AMRC conçu pour réaliser le procédé de l'une quelconque des revendications 1 à 5.

**FIG. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0971485 A1

**Non-patent literature cited in the description**

- **Yimin Zhang et al.** Transform Domain Array Processing for CDMA Systems. *Proceedings of the Tenth IEEE Workshop on Statistical Signal and Array Processing,* 14 August 2000, 23-27